# EUROPÄISCHE PATENTSCHRIFT

(11) **EP 2 019 191 B1**
(45) Veröffentlichungstag und Bekanntmachung des Hinweises auf die Patenterteilung: **17.11.2010**
(21) Anmeldenummer: 08156073.2
(22) Anmeldetag: 13.05.2008
(51) Int. Cl.: F02B 25/04, F02B 29/04, F02F 1/22

(54) **Zweitakt-Dieselbrennkraftmaschine**
Two-stroke diesel combustion engine
Moteur à combustion interne diesel deux temps

(30) Priorität: 27.07.2007 EP 07113343
(43) Veröffentlichungstag der Anmeldung: 28.01.2009
(73) Patentinhaber: Wärtsilä Schweiz AG, 8401 Winterthur (CH)
(72) Erfinder: Micali, Francesco, 8400, Winterthur (CH); Weber, Markus, 8006, Zürich (CH)
(74) Vertreter: Sulzer Management AG

(56) Entgegenhaltungen:
- EP-A- 0 559 597
- DE-A1- 19 806 175
- US-A- 2 228 832

## Beschreibung

Die Erfindung betrifft eine Hubkolbenbrennkraftmaschine, insbesondere einen Zweitakt-Grossdieselmotor mit Längsspülung für Schiffe oder stationäre Anlagen zur Erzeugung elektrischer Energie gemäss dem Oberbegriff des unabhängigen Anspruchs 1.

Zur Leistungssteigerung von Hubkolbenbrennkraftmaschinen, wie zum Beispiel von Grossdieselmotoren für Schiffe oder stationären Anlagen zur Erzeugung elektrischer Energie, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im Wesentlichen aus einer Turbine, die durch die unter Druck in die Aufladegruppe eintretenden heissen Abgase angetrieben wird. Die Turbine treibt ihrerseits ein Laufrad an, wodurch Frischluft angesaugt und verdichtet wird. Der Turbine mit Laufrad als Verdichter, eine Anordnung, die üblicherweise als Turbolader bezeichnet wird und insbesondere, aber nicht nur, im Fall von Zweitakt Grossdieselmotoren als Radialverdichter ausgelegt ist, ist ein sogenannter Diffusor, ein Ladeluftkühler, ein Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird.

Im Fall von längs gespülten Zweitakt-Grossdieselmotoren erfolgt die Einspeisung der Luft in den Brennraum eines jeden Zylinders bevorzugt über Spülschlitze, die im unteren Bereich der Zylinderlaufbuchse angeordnet sind.

EP-A-0 559 597 beschreibt einen Zweitakt-Grossdieselmotor mit Längsspülung, bei welchem zur Verbesserung des Spülvorgangs die Zylindermantelöffnungen durch eine Regelplatte teilweise derart verdeckt sind, dass der Lufteinlass unterhalb der Regelplatte grösser ist als der Lufteinlass oberhalb der Regelplatte.

Ein wesentliches Problem bei längs gespülten Dieselmotoren besteht in der Wasserkoridensation aus der Spülluft, da das Kondenswasser einen negativen Einfluss auf den Schmierölfilm an der Innenfläche der Zylinderlaufbuchse hat.

Ein grosser Teil der Luftfeuchte der Ladeluft wird bereits im Ladeluftkühler ausgeschieden, da die Motoren mit erheblichen Ladeluftdrücken betrieben, d.h. aufgeladen werden. Dieses Kondensat soll möglichst nicht in den Einlassreceiver des Motors gelangen, sondern bereits vorher möglichst vollständig abgeleitet werden. Zu diesem Zweck werden bekanntermassen Wasserabscheider verwendet, wodurch ein erheblicher Teil des Kondenswassers abgeführt werden kann.

Allerdings können aufgrund der Druckverluste im Ladeluftkühler lokal erhebliche Luftgeschwindigkeiten entstehen, wodurch das Kondensat mitgerissen wird, d.h. in den anschliessenden Wasserabscheider weitergeführt wird. Bei den bekannten Ladeluftkühlem werden typischerweise ca. 80% oder weniger des Kondensats abgeschieden, während der Rest in den Wasserabscheider weitergetragen wird.

Aufgrund mangelnder Effizienz des nach dem Ladeluftkühler angeordneten Wasserabscheiders können nicht abgeschiedene Wassertröpfchen mit der Spülluftströmung bis in den Einlassreceiver gelangen. Die in den Einlassreceiver gelangten Wassertröpfchen können sich dort frei bewegen und gelangen während des Spülprozesses durch die Zylindermantelöffnung, die Kolbenunterseite und die Spülluftöffnungen in den Brennraum des Zylinders und werden dort an die Innenfläche der Zylinderlaufbuchse geschleudert.

Wassertröpfchen auf der Kolbenunterseite können jedoch auch durch Wasserkondensation aus der Spülluft in der nach dem Wasserabscheider liegenden Spülluftströmung, oder durch Kondensation und Tröpfchenbildung beispielsweise an den Wänden der Verbindungsleitungen, des Einlassreceivers, Zylindermantels und allfällig vorhandener Ventile oder Einlassöffnungen gebildet werden.

Insbesondere unter tropischen Bedingungen gelangt mit der Spülluft häufig zu viel Kondenswasser in den Brennraum des Zylinders, was zu Schäden durch hohen Materialverschleiss am Kolben und/oder an der Zylinderlaufbuchse führen kann, da der Schmierölfilm an der Innenfläche der Zylinderlaufbuchse durch das Kondenswasser beeinträchtigt werden kann.

Aufgabe vorliegender Erfindung ist es, den Anteil von Kondenswasser in der durch die Spülluftöffnungen in die Brennräume der Zylinder einer Hubkolbenbrennkraftmaschine einströmenden Ladeluft weiter zu reduzieren.

Diese Aufgabe wird durch den Gegenstand mit den Merkmalen des unabhängigen Anspruchs 1 gelöst.

Die abhängigen Ansprüche beziehen sich auf besonders vorteilhafte Ausführungsformen der Erfindung.

Die Erfindung betrifft somit eine Hubkolbenbrennkraftmaschine, insbesondere einen Zweitakt-Grossdieselmotor mit Längsspülung, mit mindestens einem Zylinder mit einer Zylinderlaufbuchse, in welcher ein Kolben hin- und herbewegbar angeordnet ist. Die Zweitakt-Grossdieselmotoren enthalten typischerweise 5 bis 14 oder mehr senkrecht stehende Zylinder. Die Zylinderlaufbuchsen weisen in deren unteren Teil eine Vielzahl von Spülluftöffnungen auf. Ein Teil jeder Zylinderlaufbuchse ist jeweils von einem Zylindermantel umgeben, wobei der Zylindermantel wenigstens eine Zylindermantelöffnung zum Einleiten der Spülluft aus dem Einlassreceiver in die Kolbenunterseite aufweist. Der Zylindermantel umgibt somit einen unteren Teil der Zylinderlaufbuchse sowie die Spülluftöffnungen und reicht bis in eine vorgegebene Höhe der Zylinderlaufbuchse, wo der Zylindermantel mittels einer Abdeckung und Dichtung gegenüber der Zylinderlaufbuchse luftdicht verschlossen ist. Der vom Zylindermantel umfasste Raum wird als Kolbenunterseite bezeichnet. Der Boden des Zylindermantels enthält eine Durchgangsöffnung zur Durchführung einer Kolbenstange, wobei dieser Durchgang zweckmässigerweise ebenfalls luftdicht ausgeführt ist. Der vom Zylindermantel umschlossene Raum, d.h. die Kolbenunterseite, hat üblicherweise eine im Wesentlichen quaderförmige Gestalt. Bei mehrzylindrigen Hubkolbenbrennkraftmaschinen können die üblicherweise nebeneinanderliegenden Kolbenunterseiten durch Verbindungsöffnungen benachbarter Zylindermäntel miteinander verbunden sein.

Erfindungswesentlich ist nun ein im Bereich der Zylindermantelöffnung angeordnetes Umlenkmittel für die durch die Zylindermantelöffnung einströmende Spülluft. Das zwischen der Zylindermantelöffnung und den Spülluftöffnungen befindliche Umlenkmittel verhindert im Betriebszustand der Hubkolbenbrennkraftmaschine, d.h. während dem Spülen der Brennkammer mit Spülluft, eine geradlinige Strömung der Spülluft von der Zylindermantelöffnung zu den Spülluftöffnungen. Dabei strömt die Spülluft aus einer als Einlassreceiver bezeichneten Vorkammer durch die Zylindermantelöffnung über das Umlenkmittel in die Kolbenunterseite und danach durch die Spülluftöffnungen der Zylinderlaufbuchse in die Brennkammer des Zylinders. Der Einlassreceiver ist dabei eine Vorkammer ohne Kolben und dient als Zwischenspeicher für die Spülluft.

Die Zylindermantelöffnung kann an sich eine beliebige Form aufweisen. Bevorzugt ist deren Querschnitt polygonal, insbesondere rechteckig, oder oval ausgebildet. Besonders bevorzugt werden für die erfindungsgemässe Hubkolbenbrennkraftmaschine Zylindermantelöffnungen mit einem runden Querschnitt verwendet.

Ohne die erfindungsgemässen Umlenkmittel können während der Luftspülung des Brennraumes infolge der meist geringen Distanz zwischen der Zylindermantelöffnung und den Spülluftöffnungen auch grosse Wassertropfen mit hoher Geschwindigkeit durch die Spülluftöffnungen in den Brennraum gelangen. Um dies zu verhindern wird erfindungsgemäss in die Spülluftströmung nach der Zylindermantelöffnung ein Spülluft-Umlenkmittel in die Kolbenunterseite derart eingebaut, dass die zurückzulegende Distanz der von der Spülluftströmung mitgeführten Wassertröpfchen vom Eintritt durch die Zylindermantelöffnung bis zu den Spülluftöffnungen vergrössert wird. Damit wird gewährleistet, dass während dem Spülvorgang nur kleinere Wassertröpfchen die Spülluftöffnungen erreichen können.

Die Erfindung betrifft insbesondere die Kolbenunterseite eines Zylinders eines Zweitakt-Grossdieselmotors mit Längsspülung. Durch das erfindungsgemässe Umlenkmittel wird die Spülluftströmung weiter verwirbelt, so dass die Turbulenz der Spülluftströmung erhöht wird. Da eine hohe Turbulenz die Luftreibung erniedrigt, werden grössere Wassertröpfchen nicht mehr von der Spülluftströmung mitgetragen und fallen auf den Boden der Kolbenunterseite, d.h. auf den Boden des Zylindermantels. Demzufolge erhöht insbesondere der durch das Umlenkmittel geschaffene Wirbel der Spülluftströmung die Trennung und Abscheidung des Kondenswassers aus der Spülluft.

Das Umlenkmittel hat auf den Massenfluss der Spülluft keinen Einfluss, erhöht jedoch die Srömungsgeschwindigkeit der Spülluft im Eintrittsbereich der Zylindermantelöffnung. Die Geschwindigkeit der Kondenswassertröpfchen beim Eintritt in die Kolbenunterseite beträgt typischerweise bis etwa 30 m/s.

Die Reduktion der mit der Spülluft in den Brennraum eingeleiteten Kondenswassermenge bedingt insbesondere die Vermeidung der Einleitung grosser Wassertröpfchen in den Brennraum, da deren Wassermenge von der dritten Potenz des Radius der Wassertröpfchen abhängt.

Ohne Verwendung des erfindungsgemässen Umlenkmittels können Tröpfchen bis zu einem Durchmesser von typischerweise 6.5 mm oder einer Masse von 0.143 g in die Spülluftöffnungen des Zylinderlaufbuchse gelangen. Durch Verwendung eines erfindungsgemässen Umlenkmittels reduziert sich der maximale Durchmesser der in die Spülluftöffnungen der Zylinderlaufbuchse gelangten Wassertröpfchen auf etwa 2.5 mm oder eine Wassertröpfchenmasse von 0.008 g.

Durch das erfindungsgemässe Umlenkmittel verringert sich die maximal mögliche Masse der die Spülluftöffnungen der Zylinderlaufbuchse erreichenden Kondenswassertröpfchen typischerweise um 90 bis 95 %.

Das erfindungsgemässe Umlenkmittel erhöht die Strömungslänge der in der Spülluft vorhandenen oder sich bildenden Wassertröpfchen zwischen dem Eintritt durch die Zylindermantelöffnung und den Spülluftöffnungen der Zylinderlaufbuchse und erhöht auch die Turbulenz der Spülluftströmung. Durch die längere Flugbahn der Wassertröpfchen verringert sich die Wahrscheinlichkeit, dass ein bestimmtes Wassertröpfchen eine Spülluftöffnung erreicht, denn aufgrund des längeren Weges erhöht sich einerseits die Wahrscheinlichkeit der Agglomeration an den Wänden des Zylindermantels, und durch die Erhöhung der Turbulenz der Spülluftströmung erhöht sich auch die Wahrscheinlichkeit des gravitationsbedingten Herunterfallens insbesondere grösserer Wassertröpfchen auf den Boden der Kolbenunterseite.

Das Umlenkmittel kann prinzipiell eine beliebige Gestalt aufweisen und beispielsweise eine zylindrische, kegelstumpfförmige oder ebene Form aufweisen. Bevorzugt weist das Umlenkmittel eine nicht geschlossene Form in der Gestalt einer ebenen oder gekrümmten Platte auf. Hierbei kann eine gekrümmte Platte beispielsweise mulden- oder wellenförmig ausgebildet sein, kann jedoch auch anderweitige Biegungen aufweisen. Bevorzugt liegen die Längs- oder Querachsen solcher gekrümmter Umlenk-Elemente in Strömungsrichtung der Spülluft bei Eintritt in die Kolbenunterseite. Insbesondere bevorzugt wird ein Umlenkmittel in Form einer ebenen Platte.

Das Umlenkmittel wird zweckmässigerweise am Zylindermantel und/oder an der Zylinderlaufbuchse befestigt oder kann im Zylindermantel integriert sein. Bevorzugt wird das Umlenkmittel insbesondere am Zylindermantel oberhalb der Zylindermantelöffnung oder am oberen Rand der Zylindermantelöffnung befestigt. Da die Zylinderlaufbuchse typischerweise im Wesentlichen vertikal ausgerichtet ist, verläuft das Umlenkmittel bevorzugt vom oberen Rand der Zylindermantelöffnung schräg nach unten und ist gegen die Längsachse der Zylinderlaufbuchse gerichtet.

Das in Richtung der Längsachse der Zylinderlaufbuchse liegende Ende des Umlenkmittels liegt besonders bevorzugt unterhalb der Spülluftöffnungen der Zylinderlaufbuchse.

Das Umlenkmittel ist gegenüber der Längsachse der Zylinderlaufbuchse geneigt und schliesst mit dieser einen Winkel α ein. Bevorzugt ist der Winkel α ein spitzer Winkel. Dieser beträgt bevorzugt zwischen 20° und 70°, insbesondere zwischen 25° und 50°, bezogen auf einen Vollkreis von 360°.

Durch das Umlenkmittel wird die Rückseite der Zylindermantelöffnung in Einströmrichtung der Spülluft in die Kolbenunterseite gesehen bevorzugt wenigstens teilweise abgedeckt, d.h. der hinter der Zylindermantelöffnung liegende Raum der Kolbenunterseite wird durch das Umlenkmittel teilweise verdeckt. Die Spülluftströmung wird dabei nach dem Durchtritt durch die Zylindermantelöffnung schräg nach unten umgelenkt.

Das Umlenkmittel ist zweckmässigerweise einerseits oberhalb der Zylindermantelöffnung befestigt und verläuft innerhalb der Kolbenunterseite schräg in Richtung der Zylinderachse nach unten. Bevorzugt ist der äussere Rand des Umlenkmittels wenigstens streckenweise, insbesondere im Anschluss an die Zylindermantelöffnung, formschlüssig mit der Innenfläche des Zylindermantels ausgebildet. Besonders bevorzugt wird insbesondere eine luftdichte Verbindung zwischen Umlenkmittel und Zylindermantel. Dadurch wird eine Umwirbelung des Randes des Umlenkmittels zwischen Umlenkmittel und Zylindermantel durch die Spülluft und darin enthaltene Kondenswassertropfen verhindert. Dabei kann insbesondere vermieden werden, dass Spülluft über den zwischen Umlenkmittel und Zylinderwand gebildeten Randbereich des Umlenkmittels von unten nach oben strömen kann, d.h. von der angeströmten Umlenkmittel-Seite auf die entsprechende Lee-Seite.

Das freie Ende des Umlenkmittels, welches nicht an der Zylinderwand anliegt, reicht bevorzugt bis zur äusseren Wand der Zylinderlaufbuchse. Weiter bevorzugt reicht das in Richtung der Zylinderachse liegende freie Ende des Umlenkmittels an das untere Ende der Zylinderlaufbuchse. Das Umlenkmittel kann weiter bevorzugt eine zur Zylinderlaufbuchse passgenaue Form aufweisen, so dass zwischen Umlenkmittel und Zylinderlaufbuchse ein Formschluss besteht. Dieser Formschluss ist zudem bevorzugt luftdicht ausgebildet.

Die luftdichte Verbindung des Formschlusses zwischen Umlenkmittel und Zylindermantel sowie gegebenenfalls mit der Zylinderlaufbuchse kann beispielsweise durch eine Klebeverbindung erreicht werden. Bei Verwendung metallischer Umlenkmittel kann eine luftdichte Verbindung des Formschlusses zwischen Umlenkmittel und Zylindermantel und/oder Zylinderlaufbuchse beispielsweise durch eine Löt- oder Schweissverbindung bewerkstelligt werden. Im Weiteren kann ein luftdichter Formschluss auch durch eine Schraub- oder Klemmverbindung hergestellt werden.

Bevorzugt ist das gegen die Längsachse der Zylinderlaufbuchse gerichtete, zwischen dem Zylindermantel liegende, freie Ende des Umlenkmittels als gerade, in einem im Wesentlichen rechten Winkel zur Längsachse der Zylinderlaufbuchse verlaufende Kante ausgebildet. Hierbei bedeutet ein im Wesentlichen rechter Winkel einen rechten Winkel oder einen Winkel von beispielsweise 85 bis 95°, bezogen auf einen Vollkreis von 360°. Demzufolge ist die gegen die Längsachse der Zylinderlaufbuchse gerichtete freie Kante des Umlenkmittels im Wesentlichen horizontal ausgerichtet. Weiter bevorzugt wird eine frei liegende, gerade Kante des Umlenkmittels, dessen Normale gegenüber der Längsachse der Zylinderlaufbuchse um einen Winkel von 2° bis 5°, bezogen auf einen Vollkreis von 360°, geneigt ist.

Das Umlenkmittel weist an der gegen die Längsachse der Zylinderlaufbuchse gerichteten, freien und im Wesentlichen in einem rechten Winkel zur Längsachse der Zylinderlaufbuchse verlaufenden Kante bevorzugt eine Ablaufrinne für Kondenswasser auf. Weiter bevorzugt erstreckt sich diese Ablaufrinne über die gesamte zwischen dem Zylindermantel liegende freie Kante des Umlenkmittels, d.h. bei einem Umlenkmittel in Form einer ebenen Platte verläuft die Ablaufrinne bevorzugt über die gesamte freie Kantenlänge der Umlenkplatte, wobei die entsprechende Kante eine gerade Strecke beschreibt.

Die Ablaufrinne hat bevorzugt die Form einer länglichen Mulde und dient zur Aufnahme und Ableitung des Kondenswassers, welches insbesondere an der gegen die Spülluftströmung gerichteten Seite des Umlenkmittels abgeschieden und bedingt durch die Spülluftströmung und die Schwerkraft an die untere freie Kante des Umlenkmittels fliesst. Die Ableitung des in der Ablaufrinne gesammelten Kondenswassers geschieht entweder an einem Ende der Ablaufrinne durch ein vorzugsweise vertikales Abflussrohr entlang dem Zylindermantel auf den Boden der Kolbenunterseite, oder aber beidseitig der Ablaufrinne mittels je einem vorzugsweise vertikalen Abflussrohr entlang dem Zylindermantel auf den Boden der Kolbenunterseite. Das Abflussrohr weist dabei bevorzugt einen geschlossenförmigen Querschnitt auf, kann jedoch auch in Form einer Abflussrinne ausgebildet sein. Die Ableitung des Kondenswassers von der Ablaufrinne durch das Abflussrohr auf den Boden der Kolbenunterseite wird zweckmässigerweise durch die Schwerkraft bewirkt. Prinzipiell eignet sich das Ölablass-System der Hubkolbenbrennkraftmaschine auch zum Abführen des Kondenswassers aus den einzelnen Kolbenunterseiten.

In einer bevorzugten Ausführungsform wird die Ablaufrinne horizontal am Umlenkmittel befestigt, wobei dann bevorzugt je ein Abflussrohr beidseitig der Ablaufrinne vorliegt.

Die Ablaufrinne kann einen beliebigen, nicht geschlossenen Querschnitt aufweisen. Beispielsweise kann der Querschnitt halbkreisförmig sein, oder eine konvexe polygonale Kurve beschreiben, deren Zentriwinkel zweckmässigerweise 180 bis 270°, bezogen auf einen Vollkreis von 360°, beträgt.

Die Ablaufrinne ist bevorzugt derart dimensioniert, dass bis 200 kg Wasser pro Stunde abgeleitet werden können. Das Umlenkmittel kann eine beliebige Oberflächenstruktur aufweisen. Zweckmässigerweise ist dessen Oberfläche porenfrei. Die Oberfläche kann beispielsweise glatt sein oder eine vorgegebene Oberflächenrauhigkeit aufweisen.

Bevorzugt besteht das Umlenkmittel aus Stahl, insbesondere aus rostfreiem Stahl. Die Oberfläche kann jedoch auch eine Beschichtung aufweisen.

Die Dicke des Umlenkmittels beträgt bevorzugt 5 bis 10 mm.

Der durch das Umlenkmittel bedingte Druckabfall in der Spülluftströmung beträgt typischerweise 0.1- 6 mbar pro Zylinder und beträgt ca. 0.15% des mittleren Spülluftdruckes in der Kolbenunterseite und hat folglich keine negativen Auswirkungen auf das Funktionieren der Hubkolbenbrennkraftmaschine.

In einer bevorzugten Ausführungsform des erfindungsgemässen Umlenkmittels ist dieses mehrteilig, insbesondere zweiteilig ausgebildet. Die mehrteilige Ausbildung des Umlenkmittels ermöglicht deren Einführen durch Öffnungen im Zylindermantel, insbesondere durch die Zylindermantelöffnung.

Das Zusammenfügen der einzelnen Umlenkmittel-Teilelemente geschieht bevorzugt mittels einem Überlappteil, d.h. beispielsweise einem rechteckförmigen Plattenelement, welches zwei zu fügende Umlenkmittel-Teilelemente an deren Verbindungsseiten überlappt. Die Länge des Überlappteils ist durch den Abstand der freien Kante des Umlenkmittels von der Zylindermantelöffnung vorgegeben. Die Breite des Überlappteils beträgt zweckmässigerweise 50 bis 100 mm. Die Verbindung des Überlappteils mit den Umlenkmittel-Teilelementen geschieht bevorzugt mechanisch, zweckmässigerweise mittels einer Schraub- oder Nietverbindung. Da die Kolbenunterseiten der verschiedenen Zylinder selten exakt gleich dimensioniert sind, beispielsweise wegen Fertigungstoleranzen, und deren Breite (Längsausdehnung der Kolbenunterseite parallel zum Querschnitt der Zylindermantelöffnung) typischerweise um ± 10 mm variieren kann, sind die Umlenkmittel-Teilelemente und die als Verbindungselemente verwendeten Überlappteile bevorzugt derart ausgebildet, dass eine Differenz in der Breite einer Kolbenunterseite bis zu beispielsweise 20 mm ausgeglichen werden kann. Dies kann beispielsweise durch schlitzförmige Bohrungen zur Aufnahme der Verbindungsschrauben oder Verbindungsnieten bewerkstelligt werden. Weiter bevorzugt überlappen sich die erfindungsgemässen Umlenkmittel-Teilelemente selbst nicht.

Bevorzugt besteht das Umlenkmittel aus zwei Umlenkmittel-Teilelementen. Deren bevorzugt mit dem Zylindermantel formschlüssige Randzone wird nach dem Einführen in die Kolbenunterseite mit dem Zylindermantel bevorzugt luftdicht verbunden, beispielsweise mittels einer Löt- oder Schweissverbindung, wobei das Überlappteil erst nach dem Festlegen der Umlenkmittel-Teilelemente am Zylindermantel angebracht wird.

Das Überlappteil wird bevorzugt auf der der Spülluftströmung abgewandten Seite der Umlenkmittel-Teilelemente befestigt.

Die Verbindungsfuge der Umlenkmittel-Teilelemente, d.h. deren gegeneinander gerichteten Randzonen, welche mittels dem Überlappteil verbunden werden, ist bevorzugt parallel zur Einströmrichtung der Spülluft in die Kolbenunterseite ausgebildet.

Weiter bevorzugt sind die Umlenkmittel-Teilelemente derart ausgebildet, dass deren Verbindungsfuge nicht in die Mitte des Umlenkmittels fällt. Insbesondere sind die Umlenkmittel-Teilelemente dergestalt ausgebildet, dass deren Verbindungsfuge nicht in den Bereich der Zylindermantelöffnung fällt. Hierbei versteht sich der Bereich der Zylindermantelöffnung als Bereich eines geraden Zylinders mit der Zylindermantelöffnung als Grundfläche und der Mittelsenkrechten der Zylindermantelöffnung in Einströmrichtung der Spülluft gesehen als Zylinderlängsachse. Bevorzugt beträgt dabei die Teilfläche eines ersten Umlenkmittel-Teilelementes zwischen 20 bis 40% der gesamten, gegen die Spülluftströmung gerichteten Fläche des Umlenkmittels. Bei einem zweiteilig ausgeführten Umlenkmittel ist die Verbindungsfuge bevorzugt asymmetrisch angeordnet.

Bei Verwendung von Umlenkmitteln bestehend aus zwei oder mehreren Umlenkmittel-Teilelementen ist die Ablaufrinne vorzugsweise ebenfalls entsprechend der Teilung des Umlenkmittels geteilt. Insbesondere bevorzugt werden zum Verbinden der Umlenkmittel-Teilelemente mit entsprechend geteilten Ablaufrinnen-Teilelementen Überlappteile verwendet, welche ebenfalls ein Ablaufrinnenteil aufweisen, wobei die Querschnittsform des Ablaufrinnenteils des Überlappteils derjenigen der Ablaufrinnen-Teilelemente der Umlenkmittel-Teilelemente angepasst ist.

Die Erfindung wird an Hand nachfolgender Figuren weiter erläutert. Es zeigen:
- Fig. 1: Schematisch den prinzipiellen Aufbau eines Grossdieselmotors mit einem Abgasturbolader System und einem erfindungsgemässen Umlenkmittel;
- Fig. 2: Schematisch einen Längsschnitt durch einen erfindungsgemässen Zylinder eines Zweitakt-Grossdieselmotors mit Längsspülung;
- Fig. 3: Draufsicht auf eine aus Teilelementen bestehende, erfindungsgemässe Umlenkplatte;
- Fig. 4: Draufsicht auf den Querschnitt der in Fig. 3 gezeigten Umlenkplatte entlang der Linie A-A.

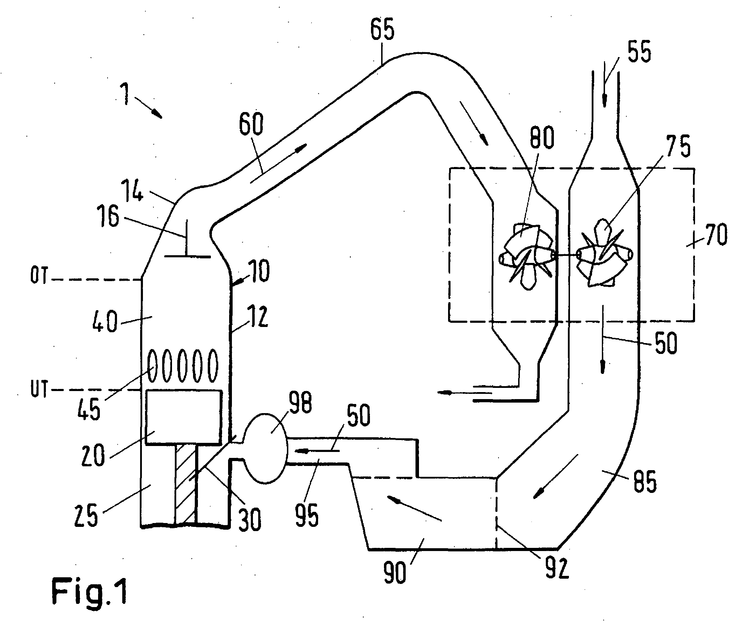

Das Zusammenwirken der unterschiedlichen Komponenten eines Abgasturbolader-Systems eines Grossdieselmotors 1 ist schematisch in Fig. 1 gezeigt. Dabei ist der Grossdieselmotor als Zweitakt-Grossdieselmotor mit Längsspülung ausgebildet und mit einem erfindungsgemässen Spülluft-Umlenkmittel 30 ausgestattet.

Der Grossdieselmotor 1 umfasst in an sich bekannter Weise üblicherweise mehrere Zylinder 10 mit einem in einem Zylinderdeckel 14 angeordneten Auslassventil 16, in welchem Zylinder 10 ein Kolben 20 zwischen einem unteren Totpunkt UT und einem oberen Totpunkt OT entlang einer Innenwandung einer Zylinderlaufbuchse 12 hin- und herbewegbar angeordnet ist. Die Zylinderlaufbuchse 12 mit Zylinderdeckel 14 und der Kolben 20 begrenzen in bekannter Weise einen Brennraum 40 des Zylinders 10. Im unteren Bereich der Zylinderlaufbuchse 12 sind mehrere Spülluftöffnungen 45 vorgesehen, die als Spülschlitze ausgeführt sind. Je nach Stellung des Kolbens 20 werden die Spülschlitze 45 von diesem überdeckt oder freigegeben. Durch die Spülluftöffnungen 45 kann die als Spülluft 50 bezeichnete Ladeluft in den Brennraum 40 des Zylinders 10 einströmen. Durch das im Zylinderdeckel 14 angeordnete Auslassventil 16 strömen die bei der Verbrennung entstehenden Abgase 60 durch eine Abgasleitung 65, die sich an das Auslassventil 16 anschliesst, in einen Abgasturbolader 70.

Der Abgasturbolader 70 umfasst als wesentliche Komponenten in an sich bekannter Weise einen Verdichter mit Verdichterlaufrad 75 zum Verdichten von Frischluft 55, sowie eine Turbine mit einem Turbinenlaufrad 80 zum Antreiben des Verdichterlaufrads 75, das durch eine Welle in bekannter Weise wirkfest mit dem Turbinenlaufrad 80 verbunden ist. Die Turbine und der Verdichter sind in einem Gehäuse angeordnet und bilden den Abgasturbolader 70, der im vorliegenden Fall verdichterseitig als Radialverdichter ausgebildet ist. Die Turbine wird in bekannter Weise durch die einströmenden heissen Abgase 60 aus dem Brennraum 40 des Zylinders 10 angetrieben.

Zum Beschicken des Brennraums 40 mit Ladeluft 50 wird durch das Verdichterlaufrad 75 über einen Ansaugstutzen Frischluft 55 angesaugt und im Abgasturbolader 70 komprimiert. Aus dem Abgasturbolader 70 gelangt die komprimierte Frischluft als Ladeluft 50 durch den nachgeschalteten Diffusor 85, den Ladeluftkühler 90 und den Wasserabscheider 95 in einen Einlassreceiver 98, von dem aus die komprimierte Ladeluft 50 über eine Umlenkplatte 30 in die Kolbenunterseite und schliesslich durch die Spülschlitze 45 unter erhöhtem Druck in den Brennraum 40 des Zylinders 10 gelangt.

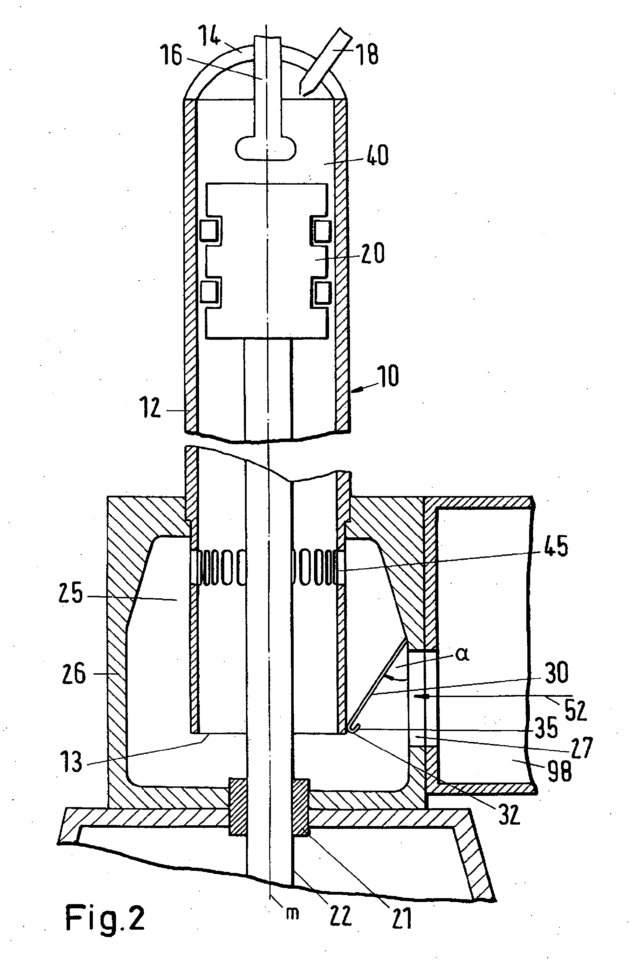

Fig. 2 zeigt schematisch einen Längsschnitt durch einen erfindungsgemässen Zylinder eines Zweitakt-Grossdieselmotors mit Längsspülung. Solche Grossdieselmotoren weisen in der Regel mehrere Zylinder 10 auf.

Der Zylinder 10 eines solchen Grossdieselmotors weist einen Zylinderdeckel 14 mit mindestens einer Einspritzdüse 18 und einem Auslassventil 16 auf. Der Zylinderdeckel begrenzt zusammen mit der Laufbuchse 12 und dem Kolben 20 den Brennraum 40 des Zylinders 10. Die Einspritzdüsen 18 sind über eine Brennstoffleitung mit einer Einspritzvorrichtung verbunden (nicht dargestellt), die den Brennstoff durch die Einspritzdüsen 18 in den Brennraum 40 des Zylinders 10 einbringt. Der Zylinder 10 enthält eine Zylinderlaufbuchse 12, in der ein Kolben 20 entlang der Längsachse m hin- und herbewegbar ist, und im unteren Teil der Zylinderlaufbuchse 12 einen Zylindermantel 26, welcher die Kolbenunterseite nach aussen abschliesst. Der Zylindermantel hat eine im Wesentlichen quaderförmige Gestalt.

Der Kolben 20 ist mittels einer Kolbenstange 22 in an sich bekannter Weise mit einer Kurbelwelle (nicht dargestellt) verbunden. Die Kolbenstange durchdringt dabei den Boden des Zylindermantels 26, wobei die dazu erforderliche Bodenöffnung mit einer Dichtung 21 versehen ist.

Die Zylinderlaufbuchse 12 enthält in einem unteren Bereich innerhalb der Kolbenunterseite 25 Spülluftöffnungen 45. Letztere erlauben der Spülluft 50 den Durchtritt in die Brennkammer 40, wenn der Kolben 20 im Bereich des unteren Totpunktes angelangt ist. Die Spülluftöffnungen 45 werden jedoch vom Kolben 20 verschlossen, wenn sich der Kolben 20 im Bereich des oberen Totpunktes befindet.

Die Spülluft 50 gelangt aus dem Einlassreceiver 98 durch eine Zylindermantelöffnung 27 in die Kolbenunterseite 25. Die Zylindermantelöffnung 27 kann an sich einen beliebigen Querschnitt aufweisen und kann beispielsweise eine runde oder ovale Form, aber auch eine geschlossene polygonale Gestalt aufweisen. Beim Durchtritt der Spülluft 50 durch die Zylindermantelöffnung 27 hat die Spülluft 50 eine Einströmrichtung 52. Nach dem Durchtritt der Spülluft 50 durch die Zylindermantelöffnung 27 wird die Spülluftströmung 50 gegenüber der Einströmrichtung 52 durch ein Umlenkmittel 30, beispielsweise in Form einer Umlenkplatte, nach unten abgelenkt.

Die Umlenkplatte 30 ist in der Kolbenunterseite oberhalb der Zylindermantelöffnung 27 befestigt und verläuft schräg nach unten und innen in Richtung der Längsachse m der Zylinderlaufbuchse 12 und endet im Bereich des unteren Randes 13 der Zylinderlaufbuchse 12. Die Umlenkplatte 30 verläuft in einer Draufsicht in Einströmrichtung 52 der Spülluft 50 gesehen von einer Seitenwand des Zylindermantels zur gegenüberliegenden Seitenwand des Zylindermantels 26, d.h. verbindet die beiden orthogonal zum in Fig. 2 gezeigten Längsschnitt liegenden Seitenwände des Zylindermantels 26 miteinander. Die Verbindung der Umlenkplatte 30 mit dem Zylindermantel 26 ist luftdicht ausgeführt, so dass keine Spülluft seitlich oder oberhalb der Umlenkplatte in den oberhalb der Umlenkplatte 30 liegenden Raum der Kolbenunterseite 25 strömen kann. Die Umlenkplatte 30 verdeckt in Einströmrichtung 52 der Spülluft 50 gesehen einen grossen Teil des Querschnitts der Zylindermantelöffnung 27.

Die untere, zwischen zwei gegenüberliegenden Wänden des Zylindermantels 26 liegende Kante 32 der Umlenkplatte 30 liegt teilweise am unteren Rand 13 der Zylinderlaufbuchse 12 an, ist jedoch nicht mit der Zylinderlaufbuchse verbunden. Deshalb beschreibt die untere Kante 32 der Umlenkplatte 30 eine freie Kante, welche in der vorliegenden Ausführungsform als gerade und horizontal liegende Kante 32 ausgebildet ist.

Die freie Kante 32 der Umlenkplatte 30 weist eine angeformte Ablaufrinne 35 auf. Die Ablaufrinne hat eine muldenförmige Gestalt und erstreckt sich über die gesamte Länge der freien Kante 32 der Umlenkplatte 30.

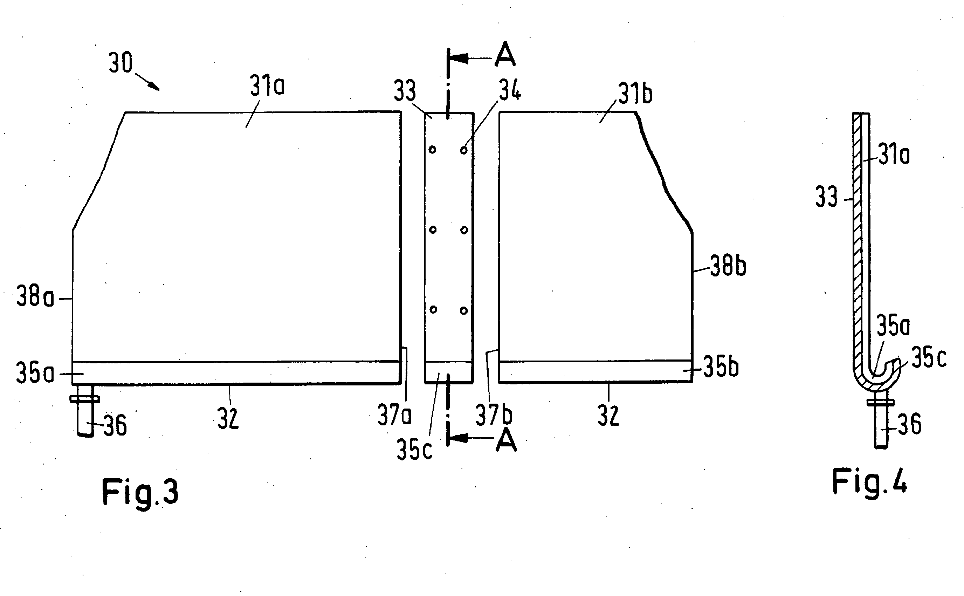

Fig. 3 zeigt eine Draufsicht auf eine aus Teilelementen 31 a, 31 b, 33 bestehende, erfindungsgemässe Umlenkplatte 30. Das Umlenkmittel in Gestalt einer Umlenkplatte 30 weist zwei Umlenkplatten-Teilelemente 31 a und 31 b auf. Fig. 3 zeigt auch ein Überlappteil 33 mit Schrauben- oder Nietlöchern 34.

Das Überlappteil 33 wird auf der Rückseite der gezeigten Teilelemente 31 a, 31 b befestigt und verbindet so die Verbindungskanten 37a, 37b der Umlenkplatten-Teilelemente 31 a und 31 b. Die freie Kante 32 des in den Zylinder eingesetzten Umlenkmittels 30 bildet eine gerade Kante. Die beiden äusseren, der Verbindungskanten 37a, 37b gegenüberliegenden Kanten 38a, 38b sind an die Form des Zylindermantels 26 angepasst, so dass eine formschlüssige und luftdichte Verbindung zwischen Umlenkplatte 30 und Zylindermantel 26 möglich ist. Dabei wird eine luftdichte Verbindung insbesondere zwischen dem Zylindermantel 26 und den äusseren Kanten 38a, 38b sowie den der freien Kante 32 gegenüberliegenden Kanten der Umlenkplatten-Teilelemente 31 a, 31 b geschaffen, wobei die Verbindung der Umlenkplatten-Teilelemente 31 a, 31 b mit dem Überlappteil 33 ebenfalls luftdicht ausgeführt wird.

Die Teilung der Umlenkplatte 30 in die beiden Umlenkplatten-Teilelemente 31 a, 31 b ist nicht symmetrisch. In der in Fig. 3 gezeigten Teilung weist das Umlenkplatten-Teilelement 31 b eine freie Kantenlänge 32 von ca. 1/3 der gesamten Kantenlänge 32 der Umlenkplatte 30 auf. Entsprechend beträgt die freie Kantenlänge 32 des Umlenkplatten-Teilelementes 31 a ca. 2/3 der gesamten Kantenlänge 32 der Umlenkplatte 30.

Am unteren Rand der Umlenkplatten-Teilelemente 31 a, 31 b und dem Überlappteil 33 sind auch die entsprechenden Ablaufrinnen-Teilelemente 35a, 35b, 35c der vorgenannten Teile zu sehen. Nach dem Verbinden des Überlappteils 33 mit den Umlenkplatten-Teilelementen 31 a, 31 b kommt das Überlappteil 33 hinter die Umlenkplatten-Teilelemente 31 a, 31 b zu liegen, so dass die Rückseite der durch die Verbindungskanten 37a, 37b gebildeten Verbindungsfuge durch das Überlappteil 33 abgedeckt wird. Das Ablaufrinnen-Teilelement 35c des Überlappteils 33 und die Ablaufrinnen-Teilelemente 35a, 35b der Umlenkplatten-Teilelementen 31 a, 31 b sind derart ausgebildet, dass bei zusammengesetzter Umlenkplatte 30 das Ablaufrinnen-Teilelement 35a sowie das Ablaufrinnen-Teilelement 35b formschlüssig vom Ablaufrinnen-Teilelement 35c des Überlappteils 33 aufgenommen werden. Zur Ableitung des Kondenswassers aus der Ablaufrinne 35 ist am linken Rand des Ablaufrinnen-Teilelements 35a ein Abflussrohr 36 angeschlossen.

In Figur 4 ist eine Draufsicht auf den Querschnitt entlang der Linie A-A der in Fig. 3 dargestellten Umlenkplatte in zusammengesetzter Ausführung gezeigt.

Die Verbindungskanten 37a und 37b der Umlenkplatten-Teilelemente 31 a, 31 b können aneinander stossen oder sich in einem gewissen Abstand parallel zueinander befinden und die dadurch entstehende Verbindungsfuge wird auf der Rückseite vom Überlappteil 33 abgedeckt. Die in Fig. 4 unten liegenden Ablaufrinnen-Teilelemente 35a, 35c weisen eine muldenförmige Form mit einem teilkreisförmigen Innenquerschnitt auf. Das links liegende Element betrifft das strömungsabgewandt befindliche Überlappteil 33 mit angeformter Ablaufrinne 35c. Anliegend an den Querschnitt des Überlappteils 33 folgt auf der rechten Seite der Querschnitt des Umlenkplatten-Teilelementes 31 a mit Ablaufrinne 35a. Die Querschnittsform der Ablaufrinne 35c des Überlappteils 33 ist derjenigen des Umlenkplatten-Teilelementes 31 a angepasst, so dass beide Ablaufrinnen-Teilelemente 35a, 35c formschlüssig übereinander liegen. In der Draufsicht auf den Querschnitt entlang der Linie A-A der in Fig. 3 dargestellten Umlenkplatte 30 ist auch das Abflussrohr 36 zur Ableitung des in der Ablaufrinne 35 gesammelten Wassers auf den Boden der Kolbenunterseite (nicht dargestellt) zu sehen.

Die Befestigung der Umlenkplatten-Teilelemente 31 a, 31 b am Zylindermantel 26 geschieht zweckmässigerweise durch Löten, Schweissen, Kleben, Schrauben oder Klemmen. Zusätzlich können die Umlenkmittel/ Umlenkmittel-Teilelemente bevorzugt auf der der Spülluft-Strömung abgewandten Seite zusätzlich durch mechanische Stützmittel (nicht gezeigt) weiter mit dem Zylindermantel verbunden werden.

## Patentansprüche

1. Hubkolbenbrennkraftmaschine, insbesondere Zweitakt-Grossdieselmotor (1) mit Längsspülung, mit mindestens einem Zylinder (10) mit einer Zylinderlaufbuchse (12), in welcher ein Kolben (20) hin- und her bewegbar angeordnet ist, wobei die Zylinderlaufbuchse (12) mehrere Spülluftöffnungen (45) aufweist, und welcher Zylinder (10) einen Zylindermantel (26) mit wenigstens einer Zylindermantelöffnung (27) aufweist, wobei der Zylindermantel (26) zumindest einen unteren Teil der Zylinderlaufbuchse (12) umgibt, und der Zylinder (10) zwischen Zylinderlaufbuchse (12) und Zylindermantel (26) eine Kolbenunterseite (25) aufweist, wobei zwischen den Spülluftöffnungen (45) und der Zylindermantelöffnung (27) ein Umlenkmittel (30) für die Spülluft (50) angeordnet ist,
**dadurch gekennzeichnet, dass**
das Umlenkmittel (30) ein ebenes oder gekrümmtes, am Zylindermantel (26) und/oder an der Zylinderlaufbuchse (12) befestigtes und gegenüber der Längsachse m der Zylinderlaufbuchse (12) unter einem vorgegebenen Winkel a geneigtes, in die Kolbenunterseite (25) ragendes Element ist, welches im Betriebszustand der Hubkolbenbrennkraftmaschine (1) eine geradlinige Strömung der Spülluft (50) von der Zylindermantelöffnung (27) zu den Spülluftöffnungen (45) verhindert.

2. Hubkolbenbrennkraftmaschine nach Anspruch 1, **dadurch gekennzeichnet, dass** das Umlenkmittel (30) eine Umlenkplatte ist.

3. Hubkolbenbrennkraftmaschine nach Anspruch 2, **dadurch gekennzeichnet, dass** der Winkel α zwischen dem Umlenkmittel (30) und der Längsachse m der Zylinderlaufbuchse (12) ein spitzer Winkel ist und bevorzugt zwischen 20° und 70°, insbesondere 25°-50°, bezogen auf einen Vollkreis von 360°, beträgt.

4. Hubkolbenbrennkraftmaschine nach einem der Ansprüche 1 bis 3, **dadurch gekennzeichnet, dass** das Umlenkmittel (30) einerseits oberhalb oder am oberen Rand der Zylindermantelöffnung (27) befestigt ist, und das in Richtung der Längsachse m der Zylinderlaufbuchse (12) frei liegende Ende (32) des Umlenkmittels (30) unterhalb der Spülluftöffnungen (45) der Zylinderlaufbuchse (12) liegt.

5. Hubkolbenbrennkraftmaschine nach einem der Ansprüche 1 bis 4, **dadurch gekennzeichnet, dass** das Umlenkmittel (30) einerseits oberhalb oder am oberen Rand der Zylindermantelöffnung (27) befestigt ist, schräg nach unten und in Richtung der Längsachse m der Zylinderlaufbuchse (12) in die Kolbenunterseite (25) ragt, wobei die äussere Umfangsfläche (38a, 38b) des Umlenkmittels (30) wenigstens teilweise formschlüssig mit dem Zylindermantel (26) ausgebildet ist.

6. Hubkolbenbrennkraftmaschine nach einem der Ansprüche 1 bis 5, **dadurch gekennzeichnet, dass** das gegen die Längsachse m der Zylinderlaufbuchse (12) gerichtete freie Ende (32) des Umlenkmittels (30) bis an den unteren Rand (13) der Zylinderlaufbuchse (12) reicht.

7. Hubkolbenbrennkraftmaschine nach einem der Ansprüche 1 bis 6, **dadurch gekennzeichnet, dass** die Verbindung des Umlenkmittels (30) mit dem Zylindermantel (26) formschlüssig ausgebildet ist.

8. Hubkolbenbrennkraftmaschine nach einem der Ansprüche 1 bis 7, **dadurch gekennzeichnet, dass** das Umlenkmittel (30) mit der Zylinderlaufbuchse (12) formschlüssig verbunden ist.

9. Hubkolbenbrennkraftmaschine nach einem der Ansprüche 1 bis 8, **dadurch gekennzeichnet, dass** die Verbindung zwischen Umlenkmittel (30) und Zylindermantel (26) luftdicht ausgebildet ist.

10. Hubkolbenbrennkraftmaschine nach einem der Ansprüche 1 bis 9, **dadurch gekennzeichnet, dass** die Verbindung zwischen Umlenkmittel (30) und Zylinderlaufbuchse (12) luftdicht ausgebildet ist.

11. Hubkolbenbrennkraftmaschine nach einem der Ansprüche 1 bis 10, **dadurch gekennzeichnet, dass** die Verbindung des Umlenkmittels (30) mit dem Zylindermantel (26) und/oder der Zylinderlaufbuchse (12) wenigstens teilweise eine Klebe, Löt-, Schweiss-, Schraub- oder Klemmverbindung ist.

12. Hubkolbenbrennkraftmaschine nach einem der Ansprüche 1 bis 11, **dadurch gekennzeichnet, dass** das gegen die Längsachse m der Zylinderlaufbuchse (12) gerichtete, zwischen dem Zylindermantel (26) liegende, freie Ende (32) des Umlenkmittels (30) als gerade, in einem im Wesentlichen rechten Winkel zur Längsachse m der Zylinderlaufbuchse verlaufende Kante ausgebildet ist.

13. Hubkolbenbrennkraftmaschine nach einem der Ansprüche 1 bis 12, **dadurch gekennzeichnet, dass** eine Normale auf die frei liegende Kante des Umlenkmittels (30) mit der Längsachse m der Zylinderlaufbuchse (12) einen Winkel von 2° bis 5°, bezogen auf einen Vollkreis von 360°, einschliesst.

14. Hubkolbenbrennkraftmaschine nach einem der Ansprüche 1 bis 13, **dadurch gekennzeichnet, dass** das gegen die Längsachse m der Zylinderlaufbuchse (12) gerichtete, zwischen dem Zylindermantel (26) frei liegende Ende (32) des Umlenkmittels (30) eine Ablaufrinne (35) für Kondenswasser aufweist.

15. Hubkolbenbrennkraftmaschine nach Anspruch 14, **dadurch gekennzeichnet, dass** sich die Ablaufrinne (35) über das ganze zwischen dem Zylindermantel (26) frei liegende Ende (32) des Umlenkmittels (30) erstreckt.

16. Hubkolbenbrennkraftmaschine nach Anspruch 14 oder 15, **dadurch gekennzeichnet, dass** die Kolbenunterseite (25) wenigstens auf einer Seite der Ablaufrinne (35) ein Abflussrohr zum Ableiten des in der Ablaufrinne (25) gesammelten Kondenswassers auf den Boden der Kolbenunterseite (25) aufweist.

17. Hubkolbenbrennkraftmaschine nach einem der Ansprüche 14 bis 16, **dadurch gekennzeichnet, dass** beidseitig der Ablaufrinne (35) entlang des Zylindermantels (26) ein Abflussrohr zum Ableiten des in der Ablaufrinne (35) gesammelten Kondenswassers auf den Boden der Kolbenunterseite (25) vorhanden ist.

18. Hubkolbenbrennkraftmaschine nach einem der Ansprüche 1 bis 17, **dadurch gekennzeichnet, dass** das Umlenkmittel (30) mehrteilig, insbesondere zweiteilig ausgebildet ist.

19. Hubkolbenbrennkraftmaschine nach Anspruch 18, **dadurch gekennzeichnet, dass** die Umlenkmittel-Teilelemente (31) mit einem Überlappteil (33) zusammengefügt sind, wobei das Überlappteil bevorzugt auf der der Spülluftströmung (50) abgewandten Seite der Teil-Umlenkmittel (31) angebracht ist.

20. Hubkolbenbrennkraftmaschine nach Anspruch 18 oder 19, **dadurch gekennzeichnet, dass** das Umlenkmittel (30) zweiteilig ausgeführt ist, und die Verbindungsfuge asymmetrisch angeordnet ist.

21. Hubkolbenbrennkraftmaschine nach einem der Ansprüche 18 bis 20, **dadurch gekennzeichnet, dass** die Teilfläche eines ersten Umlenkmittel-Teilelementes (31 b) zwischen 20 und 40% der gesamten, gegen die Spülluftströmung (50) gerichteten Fläche des Umlenkmittels (30) beträgt.

## Claims

1. A reciprocating piston combustion engine, in particular a two-stroke large diesel engine (1) with longitudinal scavenging, with at least one cylinder (10) with a cylinder liner (12) in which a piston (20) is arranged movable to and fro, wherein the cylinder liner (12) has a plurality of scavenging air openings (45) and said cylinder (10) has a cylinder jacket (26) with at least one cylinder jacket opening (27), wherein the cylinder jacket (26) surrounds at least a lower part of the cylinder liner (12) and the cylinder (10) has a piston underside (25) between the cylinder liner (12) and the cylinder jacket (26), wherein a deflection means (30) for the scavenging air (50) is arranged between the scavenging air openings (45) and the cylinder jacket opening (27),
**characterised in that**
the deflection means (30) is a planar or curved element fixed to the cylinder jacket (26) and/or to the cylinder liner (12), inclined at a predetermined angle α to the longitudinal axis m of the cylinder liner (12) and projecting into the piston underside (25) which prevents a straight-line flow of the scavenging air (50) from the cylinder jacket opening (27) to the scavenging air openings (45) in the operating state of the reciprocating piston combustion engine (1).

2. A reciprocating piston combustion engine in accordance with claim 1, **characterised in that** the deflection means (30) is a deflector plate.

3. A reciprocating piston combustion engine in accordance with claim 2, **characterised in that** the angle α between the deflection means (30) and the longitudinal axis m of the cylinder liner (12) is an acute angle and preferably amounts to between 20° and 70°, in particular 25° - 50°, with reference to a full circle of 360°.

4. A reciprocating piston combustion engine in accordance with any one of the claims 1 to 3, **characterised in that** the deflection means (30) is on the one hand fastened above or to the upper rim of the cylinder jacket opening (27) and the end (32) of the deflection means (30) free in the direction of the longitudinal axis m of the cylinder liner (12) lies below the scavenging air openings (45) of the cylinder liner (12).

5. A reciprocating piston combustion engine in accordance with any one of the claims 1 to 4, **characterised in that** the deflection means (30) is, on the one hand, fastened above or to the upper rim of the cylinder jacket opening (27), projects obliquely downwardly and in the direction of the longitudinal axis m of the cylinder liner (12) into the piston underside (25), with the outer peripheral surface (38a, 38b) of the deflection means (30) being formed at least partially in shape matched manner with the cylinder jacket (26).

6. A reciprocating piston combustion engine in accordance with any one of the claims 1 to 5, **characterised in that** the free end (32) of the deflection means (30) directed towards the longitudinal axis m of the cylinder liner (12) extends up to the lower rim (13) of the cylinder liner (12).

7. A reciprocating piston combustion engine in accordance with any one of the claims 1 to 6, **characterised in that** the connection of the deflection means (30) to the cylinder jacket (26) is formed in shape matched manner.

8. A reciprocating piston combustion engine in accordance with any one of the claims 1 to 7, **characterised in that** the deflection means (30) is connected in shape matched manner to the cylinder liner (12).

9. A reciprocating piston combustion engine in accordance with any one of the claims 1 to 8, **characterised in that** the connection between the deflection means (30) and the cylinder jacket (26) is airtight.

10. A reciprocating piston combustion engine in accordance with any one of the claims 1 to 9, **characterised in that** the connection between the deflection means (30) and the cylinder liner (12) is airtight.

11. A reciprocating piston combustion engine in accordance with any one of the claims 1 to 10, **characterised in that** the connection of the deflection means (30) to the cylinder jacket (26) and/or to the cylinder liner (12) is at least partly a glued, soldered/brazed, welded, screwed or clamped connection.

12. A reciprocating piston combustion engine in accordance with any one of the claims 1 to 11, **characterised in that** free end (32) of the deflection means (30) directed towards the longitudinal axis m of the cylinder liner (12) and lying between the cylinder jacket (26) is formed as a straight edge extending essentially at a right angle to the longitudinal axis m of the cylinder liner.

13. A reciprocating piston combustion engine in accordance with any one of the claims 1 to 12 **characterised in that** a normal to the free edge of the deflection means (30) includes an angle of 2° to 5° with the longitudinal axis m of the cylinder liner (12), in relation to a full circle of 360°.

14. A reciprocating piston combustion engine in accordance with any one of the claims 1 to 13, **characterised in that** the end (32) of the deflection means (30) directed towards the longitudinal axis m of the cylinder liner (12), lying free between the cylinder jacket (26) has a drain channel (35) for condensed water.

15. A reciprocating piston combustion engine in accordance with claim 14, **characterised in that** the drain channel (35) extends over the entire end of the deflection means (30) lying free between the cylinder jacket (26).

16. A reciprocating piston combustion engine in accordance with one of the claims 14 or 15, **characterised in that** on at least one side of the drain channel (35) the piston underside (25) has a drain tube for draining the condensed water collected in the drain channel (35) onto the floor of the piston underside (25).

17. A reciprocating piston combustion engine in accordance with any one of the claims 14 to 16, **characterised in that** a drain tube is present for draining the condensed water collected in the drain channel (35) onto the base of the piston underside (25) on both sides of the drain channel (35) along the cylinder jacket (26).

18. A reciprocating piston combustion engine in accordance with any one of the claims 1 to 17, **characterised in that** the deflection means (30) is formed in a plurality of parts, in particular in two parts.

19. A reciprocating piston combustion engine in accordance with claim 18, **characterised in that** the part elements (31) of the deflection means are jointed to an overlapping part (33), with the overlapping part preferably being mounted on the side of the part deflection means (31) facing away from the flow of scavenging air (50).

20. A reciprocating piston combustion engine in accordance with claim 18 or claim 19, **characterised in that** the deflection means (30) is designed in two parts and the connection joint is arranged asymmetrically.

21. A reciprocating piston combustion engine in accordance with any one of the claims 18 to 20, **characterised in that** the part area of a first part element (31b) of the deflection means amounts to between 20% and 40% of the total area of the deflection means (30) directed against the flow of scavenging air (50).

## Revendications

1. Moteur alternatif à combustion interne, en particulier grand moteur Diesel à deux temps (1) avec balayage longitudinal, avec au moins un cylindre (10) avec une chemise de cylindre (12) dans laquelle un piston (20) est disposé d'une manière déplaçable alternativement, où la chemise de cylindre (12) présente plusieurs ouvertures d'air de balayage (45), et ledit cylindre (10) présente un corps de cylindre (26) avec au moins une ouverture de corps de cylindre (27), où le corps de cylindre (26) entoure au moins une partie inférieure de la chemise de cylindre (12), et le cylindre (10) présente entre la chemise de cylindre (12) et le corps de cylindre (26) un côté inférieur de piston (25), où est disposé entre les ouvertures d'air de balayage (45) et l'ouverture de corps de cylindre (27) un moyen de renvoi (30) pour l'air de balayage (50),
**caractérisé en ce que** le moyen de renvoi (30) est un élément plan ou courbé faisant saillie dans le côté inférieur de piston (25), fixé au corps de cylindre (26) et/ou à la chemise de cylindre (12) et incliné par rapport à l'axe longitudinal m de la chemise de cylindre (12) sous un angle prédéfini α, qui, à l'état de fonctionnement du moteur alternatif à combustion interne (1), empêche un écoulement rectiligne de l'air de balayage (50) de l'ouverture de corps de cylindre (27) vers les ouvertures d'air de balayage (45).

2. Moteur alternatif à combustion interne selon la revendication 1, **caractérisé en ce que** le moyen de renvoi (30) est une plaque de renvoi.

3. Moteur alternatif à combustion interne selon la revendication 2, **caractérisé en ce que** l'angle α entre le moyen de renvoi (30) et l'axe longitudinal m de la chemise de cylindre (12) est un angle aigu et est compris de préférence entre 20° et 70°, en particulier 25°-50°, par rapport à un cercle complet de 360°.

4. Moteur alternatif à combustion interne selon l'une des revendications 1 à 3, **caractérisé en ce que** le moyen de renvoi (30) est fixé, d'une part, au-dessus ou au bord supérieur de l'ouverture de corps de cylindre (27), et que l'extrémité (32) du moyen de renvoi (30) situé librement dans la direction de l'axe longitudinal m de la chemise de cylindre (12) se situe en dessous des ouvertures d'air de balayage (45) de la chemise de cylindre (12).

5. Moteur alternatif à combustion interne selon l'une des revendications 1 à 4, **caractérisé en ce que** le moyen de renvoi (30) est fixé, d'une part, au-dessus ou au bord supérieur de l'ouverture de corps de cylindre (27), fait saillie en biais vers le bas et en direction de l'axe longitudinal m de la chemise de cylindre (12) dans le côté inférieur de piston (25), où la face de pourtour extérieure (38a, 38b) du moyen de renvoi (30) est réalisée au moins partiellement par concordance des formes avec le corps de cylindre (26).

6. Moteur alternatif à combustion interne selon l'une des revendications 1 à 5, **caractérisé en ce que** l'extrémité libre (32) du moyen de renvoi (30) dirigée contre l'axe longitudinal m de la chemise de cylindre (12) s'étend jusqu'au bord inférieur (13) de la chemise de cylindre (12).

7. Moteur alternatif à combustion interne selon l'une des revendications 1 à 6, **caractérisé en ce que** la liaison du moyen de renvoi (30) avec le corps de cylindre (26) est réalisée par concordance des formes.

8. Moteur alternatif à combustion interne selon l'une des revendications 1 à 7, **caractérisé en ce que** le moyen de renvoi (30) est relié à la chemise de cylindre (12) par concordance des formes.

9. Moteur alternatif à combustion interne selon l'une des revendications 1 à 8, **caractérisé en ce que** la liaison entre le moyen de renvoi (30) et le corps de cylindre (26) est réalisé d'une manière étanche à l'air.

10. Moteur alternatif à combustion interne selon l'une des revendications 1 à 9, **caractérisé en ce que** la liaison entre le moyen de renvoi (30) et la chemise de cylindre (12) est réalisée d'une manière étanche à l'air.

11. Moteur alternatif à combustion interne selon l'une des revendications 1 à 10, **caractérisé en ce que** la liaison du moyen de renvoi (30) avec le corps de cylindre (26) et/ou la chemise de cylindre (12) est au moins partiellement une liaison par collage, brasage, soudage, vissage ou serrage.

12. Moteur alternatif à combustion interne selon l'une des revendications 1 à 11, **caractérisé en ce que** l'extrémité libre (32) du moyen de renvoi (30) dirigée contre l'axe longitudinal m de la chemise de cylindre (12), située entre le corps de cylindre (26) est réalisée en tant qu'arête droite s'étendant sensiblement selon un angle droit à l'axe longitudinal m de la chemise de cylindre.

13. Moteur alternatif à combustion interne selon l'une des revendications 1 à 12, **caractérisé en ce qu'**une normale sur l'arête située librement du moyen de renvoi (30) avec l'axe longitudinal m de la chemise de cylindre (12) forme un angle de 2° à 5° par rapport à un cercle complet de 360°.

14. Moteur alternatif à combustion interne selon l'une des revendications 1 à 13, **caractérisé en ce que** l'extrémité (32) du moyen de renvoi (30) dirigée contre l'axe longitudinal m de la chemise de cylindre (12), située librement entre le corps de cylindre (26), présente une rigole d'écoulement (35) pour l'eau de condensation.

15. Moteur alternatif à combustion interne selon la revendication 14, **caractérisé en ce que** la rigole d'écoulement (35) s'étend sur toute l'extrémité (32) du moyen de renvoi (30) située librement entre le corps de cylindre (26).

16. Moteur alternatif à combustion interne selon la revendication 14 ou 15, **caractérisé en ce que** le côté inférieur de piston (25) présente au moins sur un côté de la rigole d'écoulement (25) un tube d'écoulement pour évacuer l'eau de condensation qui s'est accumulée dans la rigole d'écoulement (25) sur le fond du côté inférieur de piston (25).

17. Moteur alternatif à combustion interne selon l'une des revendications 14 à 16, **caractérisé en ce qu'**il est réalisé des deux côtés de la rigole d'écoulement (35) le long du corps de cylindre (26) un tube d'écoulement pour évacuer l'eau de condensation qui s'est accumulée dans la rigole d'écoulement (35) sur le fond du côté inférieur de piston (25).

18. Moteur alternatif à combustion interne selon l'une des revendications 1 à 17, **caractérisé en ce que** le moyen de renvoi (30) est réalisé en plusieurs parties, en particulier en deux parties.

19. Moteur alternatif à combustion interne selon la revendication 18, **caractérisé en ce que** les éléments partiels de moyen de renvoi (31) sont assemblés avec une partie de recouvrement (33), la partie de recouvrement étant disposée de préférence sur le côté des moyens de renvoi partiels (31) éloigné de l'écoulement d'air de balayage (50).

20. Moteur alternatif à combustion interne selon la revendication 18 ou 19, **caractérisé en ce que** le moyen de renvoi (30) est réalisé en deux parties, et que le joint d'assemblage est disposé d'une manière asymétrique.

21. Moteur alternatif à combustion interne selon l'une des revendications 18 à 20, **caractérisé en ce que** la face partielle d'un premier élément partiel de moyen de renvoi (31b) représente entre 20 et 40% de l'ensemble de la face du moyen de renvoi (30) dirigée contre l'écoulement d'air de balayage (50).
